# EUROPEAN PATENT SPECIFICATION

(11) **EP 3 168 009 B1**
(45) Date of publication and mention of the grant of the patent: **26.01.2022**
(21) Application number: 16197290.6
(22) Date of filing: 04.11.2016
(51) Int. Cl.: H02P 3/02, H02P 6/00, B25F 5/00, G06F 9/48, G08C 17/02

(54) **ELECTRIC WORKING MACHINE AND WORKING MACHINE MANAGEMENT SYSTEM**
ELEKTRISCHE ARBEITSMASCHINE UND VERWALTUNGSSYSTEM FÜR ARBEITSMASCHINEN
OUTILLAGE ÉLECTRIQUE ET SYSTÈME DE GESTION DES OUTILLAGES

(30) Priority: 11.11.2015 JP 2015221366
(43) Date of publication of application: 17.05.2017
(73) Proprietor: Makita Corporation, Anjo, Aichi 446-8502 (JP)
(72) Inventor: Yamamoto, Hirokatsu, Anjo, Aichi 446-8502 (JP)
(74) Representative: Kramer Barske Schmidtchen Patentanwälte PartG mbB

(56) References cited:
- EP-A1- 1 619 001
- EP-A1- 3 233 385
- US-A1- 2003 200 273
- US-A1- 2004 108 120
- US-A1- 2007 296 286
- US-A1- 2010 327 667
- Triton Hurd ET AL: "Hardware-controlled Brushless DC Motors", EDN, 26 August 2010 (2010-08-26), XP055360075, Retrieved from the Internet: URL:http://m.eet.com/media/1154452/25570-h ardware_controlled_brushless_dc_motors_eas e_the_burden_on_cpus_pdf.pdf [retrieved on 2017-03-29]

## Description

### BACKGROUND

The present disclosure relates to an electric working machine configured to perform a motor control process for controlling a status of electric power supply from an electric-power supply unit to a motor. The present disclosure also relates to a working machine management system comprising the electric working machine and a managing device.

Electric working machines that comprise a motor, an electric-power supply unit, and a control unit, and perform motor control processes for controlling a status of electric power supply from the electric-power supply
unit to the motor are known.

US 2004/108120 A1 relates to an electrical hand tool device adapted to receive a locking signal and an unlocking signal and it discloses:
An electric working machine , comprising:
   a motor;
   a trigger switch:
      an electric-power supply unit configured to supply electric power to the motor, a control unit configured to perform a motor control process for controlling status of the electric power supply from the electric-power supply unit to the motor;
      a signal processing unit configured to perform a signal control process for sending and receiving a signal to and from the signal processing unit and an external device, and to receive at least a stop-command signal from the external device;
      wherein the control unit is configured to stop the electric power supply to the motor in a case where the stop-command signal is received at the signal processing unit when the electric power supply from the electric-power supply unit to the motor is in process; and
      the control unit is configured to, once the signal processing unit receives the stop-command signal and the control unit thereby stops the electric power supply to the motor, maintain a stop-state of power supply to the motor until the signal processing unit receives a permission command signal from the external device.

EP 1 619 001 A1 relates to a power tool including a wireless remote stop for terminating the flow of electricity to an electric motor.

Triton Hurd et. al.: "HARDWARE-CONTROLLED BRUSHLESS DC MOTORS", EDN, 26 August 2010 (2010-08-26), XP 055360075 relates to controlling brushless DC motors by using a microcontroller.

US 2003/0200273 A1 relates to a technique for providing communication between two computers through a network.

US 2010/0327667 A1 relates to a technology, which constructs a safety device compliant with various kinds of safety standards.

US 2007/0296286 A1 relates to a hand tool for use with a variety of working attachments with varied speed and/or torque requirements.

US 2004/0108120 A1 relates to an electrical hand tool device adapted to receive a locking signal and an unlocking signal during normal operation of the hand tool device.

Some electric working machines are configured such that motor drive (current conduction to the motor) is permitted when an operation permission signal from an external device (such as a managing device) is received, and that the motor drive is prohibited when the operation permission signal is not received. One example of such machines is an electric working machine used for tightening screws configured to receive an operation permission signal from a managing device that determines whether the posture (inclination) of the electric working machine itself is within an allowable range (for example, see Japanese Unexamined Patent Application Publication No. 2010-058217).

In a working machine management system comprising the aforementioned electric working machine and the managing device, a detection signal from a posture sensor comprised in the electric working machine is inputted to the managing device. And, based on the detection signal, the managing device determines whether the posture of the electric working machine is within, an allowable range. In accordance with a result of the determination, the managing device sends an operation permission signal to the electric working machine if the posture is within the allowable range, or stop sending the operation permission signal to the electric working machine if the posture is not within the allowable range. The managing device determines whether the posture of the electric working machine is within the allowable range by determining whether the posture of the electric working machine is suitable for tightening screws.

For example, if an operation of tightening a screw is performed when the electric working machine is in an unsuitable posture, then some problems such as seizure of the screw could occur. In contrast, by having the managing device determine whether the posture of the electric working machine is within the allowable range and alter between sending and not sending the operation permission signal in accordance with the result of the determination, the motor drive is prohibited when the posture of the electric working machine is unsuitable. Thereby the motor drive is prohibited when the screw is inserted slantwise, and therefore the seizure of the screw can be reduced.

In other words, it is a known technique to stop the operation of the electric working machine (stop the current conduction to the motor) when the electric working machine itself is in an unsuitable state.

### SUMMARY

A problem in the aforementioned conventional electric working machine is that the operation of the electric working machine (the current conduction to the motor) cannot be stopped when an external factor unrelated to the state of the electric working machine itself occurs.

For example, in a manufacturing line of a product manufacturing plant, if processing performed by the electric working machine in a downstream step is continued when an unsuitable processing is performed on a product in an upstream step, then the product will be defective. To reduce production of such a defective product, it is desirable to immediately stop the processing performed by the electric working machine in the downstream step when an unsuitable processing is performed on the product in the upstream step.

In one aspect of the present disclosure, it is desirable to provide an electric working machine and a working machine management system that can stop operating also when an external factor unrelated to the state of the electric working machine itself occurs.

### MEANS FOR SOLVING THE PROBLEM

The invention is defined by the device of claim 1. Preferred embodiments of invention are disclosed in dependent claims 2-12.

### BRIEF DESCRIPTION OF THE DRAWINGS

Embodiments of the present disclosure will be explained hereinafter with reference to the drawings.
FIG. 1 is an explanatory diagram representing a schematic configuration of a working machine management system comprising an electric working machine and a managing device.
FIG. 2 is a flowchart representing processing contents of a motor control process.
FIG. 3 is an explanatory diagram representing a schematic configuration of a second working machine management system comprising a second electric working machine and the managing device.
FIG. 4 is an explanatory diagram representing a schematic configuration of a third working machine management system comprising a third electric working machine and the managing device.

### DETAILED DESCRIPTION OF THE PREFERRED EMBODIMENTS

### [Description of Embodiments]

### [1. First Embodiment]

### [1-1. Overall Configuration]

A working machine management system 1 according to the present embodiment will be explained.

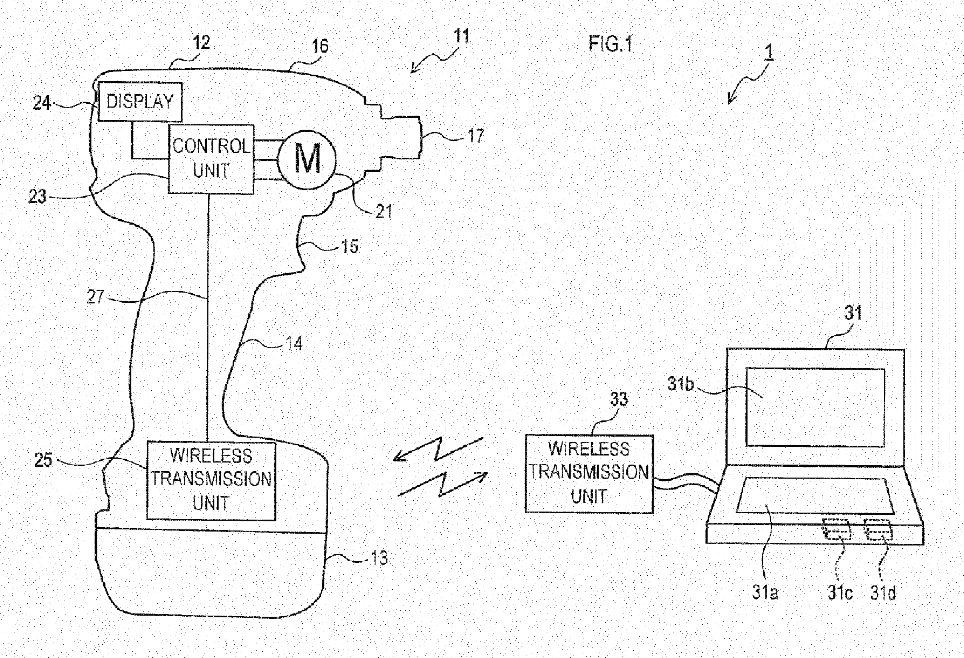

As shown in FIG. 1, the working machine management system 1 comprises an electric working machine 11 and a managing device 31.

The working machine management system 1 serves to manage the electric working machine 11 that is used in a manufacturing line of a product manufacturing plant. The electric working machine 11 may be an impact driver 11 in one example. The electric working machine 11 is used in operations in a screw-tightening step among a plurality of manufacturing steps in the manufacturing line.

The managing device 31 is a device for managing the status of electric working machines and/or machining devices used in the manufacturing line. The managing device 31 is also a device for managing manufactured quality of the products. Note that the managing device 31 can stop the operation of the electric working machine 11 and/or the machining devices by sending an operation prohibition command to the electric working machine 11 and/or to the machining devices.

The electric working machine 11 comprises a main body of a working machine 12, and a battery pack 13. The main body of the working machine 12 comprises a motor 21, a control unit 23, a display 24, and a wireless transmission unit 25.

The main body of the working machine 12 is configured so that the battery pack 13 can be attached thereto and detached therefrom. The main body of the working machine 12 comprises a handle unit 14 that provides a grip for a user. An attachment unit of the battery pack 13 is provided at an end of the handle unit 14.

The main body of the working machine 12 comprises a motor housing unit 16 for housing the motor 21 that is a drive source for the electric working machine 11. A transferring system (illustration omitted) for transferring rotation of the motor 21 to the forefront of the working machine is housed in the tip side of the motor housing unit 16. And, a sleeve 17 for attaching a tool bit (a driver bit, for example (illustration omitted)), which is one example of a working machine element, is projected from the forefront of the main body of the working machine 12.

A trigger switch 15 (activation switch 15) for operating the electric working machine 11 by rotationally driving the motor 21 is disposed by the upper-front of the handle unit 14 in the main body of the working machine 12. The trigger switch 15 is configured to be operable by the user (operator) of the electric working machine 11 while the user is holding the handle unit 14.

The battery pack 13 incorporates a battery (illustration omitted). The battery is configured with serially-coupled rechargeable battery cells that generate a specified DC voltage. The battery pack 13 comprises electrodes (such as a positive electrode and a negative electrode (illustration omitted)) that is electrically coupled to the main body of the working machine 12 when the battery pack 13 is attached to the main body of the working machine 12.

The battery pack 13 supplies the main body of the working machine 12 with an electric power for motor drive when attached to the main body of the working machine 12. Specifically, an electric current for driving flows from the battery incorporated in the battery pack 13, via the electrodes (positive and negative electrodes), to the motor 21.

The battery incorporated in the battery pack 13 may be a lithium ion rechargeable battery.

The motor 21 may be a DC brushless motor.

The control unit 23 that operates by the electric power supply received from the battery pack 13 is housed inside the main body of the working machine 12. The control unit 23 executes varieties of control processes such as a motor control process. The motor control process is for rotating the motor 21 in accordance with an operated amount of the trigger switch 15.

The control unit 23 comprises a calculation processing device (microcomputer) comprising a CPU, ROM, RAM, and I/O, for example. The control unit 23 drives the motor 21 by turning on and off a switch (illustration omitted) to conduct and interrupt the electric current for driving to the motor 21 when the control unit 23 detects that the trigger switch 15 is turned on. Specifically, the control unit 23 rotates the motor 21 to a target number of rotation which is in accordance with the operated amount of the trigger switch 15. To be more specific, the control unit 23 turns on and off the switch at a duty ratio corresponding to the target number of rotation.

Note that a slightest pulling operation of the trigger switch 15 does not always immediately start a drive of the motor 21. The control unit 23 does not start the drive of the motor 21 until the pulling operation of the trigger switch 15 is extended to a given amount (small amount). If the amount of the pulling operation of the trigger switch 15 exceeds the given amount, then the control unit 23 starts the drive of the motor 21 and then controls the drive of the motor 21 so that the number of rotation (speed of rotation) of the motor 21 changes in accordance with the pulled amount (for example, in proportion to the pulled amount). The control unit 23 controls the drive of the motor 21 so that the number of rotation of the motor 21 is a predefined maximum number of rotation when the trigger switch 15 is pulled to a specified position (for example, fully pulled to the rear).

A display 24 displays various information (such as operating status of the electric working machine 11, and command status from the managing device 31) in accordance with a command from the control unit 23. The display 24 may be configured with, for example, a liquid crystal display (LCD) that can display letters and/or images, and a light-emitting diode that is installed to respond to each information.

The wireless transmission unit 25 is disposed for performing wireless transmission with the managing device 31. The wireless transmission unit 25 is coupled to the control unit 23 via a signal path 27, and sends a wireless signal to the managing device 31 (to be specific, to a wireless transmission unit 33) and receives a wireless signal from the managing device 31 in accordance with a command from the control unit 23.

The control unit 23 sends and receives various information to and from the control unit 23 and the managing device 31 via the wireless transmission unit 25 by performing a transmission process based on a specified transmission protocol in accordance with a predefined control program.

The managing device 31 is configured to receive an input operation from a manager who manages the working machine management system 1, and to send a command signal to the electric working machine 11. The managing device 31 is configured with, for example, information processing terminal devices (such as, notebook personal computers, and tablet terminal devices).

The managing device 31 is coupled to the wireless transmission unit 33 for performing wireless transmission with the electric working machine 11. The managing device 31 comprises a USB connecting electrode (illustration omitted) and thus is configured to be capable of performing wire transmission with other devices through USB cables.

The managing device 31 comprises an operating unit 31a for the user to input operation, a display 31b having, for example, a liquid crystal display (LCD) for displaying various information, a storage unit 31c for storing the various information, and a control unit 31d having a calculation processing device (microcomputer) that performs varieties of control processes.

The control unit 31d sends and receives various information to and from the electric working machine 11 through the wireless transmission unit 33 by performing the transmission process that is based on the specified transmission protocol in accordance with a command inputted by the manager via the operating unit 31a, or in accordance with the predefined control program.

The control unit 31d can obtain desired information of the electric working machine 11 via the wireless transmission unit 33 by, for example, sending a signal to request various information (such as operation histories) to the electric working machine 11. In addition, the control unit 31d can manage operating status of the electric working machine 11 by, for example, sending a command signal (a motor prohibit signal Sb (a stop-command signal), a motor permit signal Sa (a permission command signal)) to the electric working machine 11.

In other words, the wireless transmission unit 33 sends wireless signals to the electric working machine 11 (to be specific, the wireless transmission unit 25) and receives wireless signals from the electric working machine 11 in accordance with a command from the managing device 31 (to be specific, the control unit 31d). The control unit 31d executes processes such as a display process for displaying various information obtained from the electric working machine 11 on the display 31b, and a storing process for storing various information obtained from the electric working machine 11 into the storage unit 31c.

The managing device 31 is configured to send the motor prohibit signal Sb to the electric working machine 11 when a predefined emergency-stop condition is satisfied. The managing device 31 is configured to send the motor permit signal Sa to the electric working machine 11 when the emergency-stop condition.

The managing device 31 in the present embodiment determines that the emergency-stop condition is satisfied when the emergency-stop command is inputted by the manager via the operating unit 31a, and determines that the emergency-stop condition is not satisfied when a normal operation command is inputted by the manager via the operating unit 31a.

### [1-2. Control Process in Electric Working Machine]

Next, varieties of control processes executed by the control unit 23 in the electric working machine 11 (the main body of the working machine 12) will be explained.

The varieties of control processes that the control unit 23 executes are at least the motor control process and the signal control process. The motor control process is a control process for controlling the status of the electric power supply from the battery pack 13 to the motor 21. The signal control process is a control process for sending and receiving a signal to and from the control unit 23 and the managing device 31. The control unit 23 also executes processes such as a display control process for controlling displayed content on the display 24, and a malfunction detecting process for detecting malfunctions in the electric working machine 11(the main body of the working machine 12, and the battery pack 13).

Priority of process interruption is fixed for each of the varieties of control processes. And, a frequency of execution (execution cycle) is also fixed for each of the varieties of control processes. The control unit 23 preferentially executes a control process that is ranked higher in the priority when execution requests for two or more control processes emerge at the same time.

In the present embodiment, the motor control process is ranked highest of all control processes in the priority, thus is ranked higher than the signal control process. Thus, the control unit 23 interrupts the signal control process and preferentially executes the motor control process when an execution request for the motor control process emerges during the execution of the signal control process. Alternatively, the control unit 23 continues executing the motor control process and then executes the signal control process after the motor control process is ended when an execution request for the signal control process emerges during the execution of the motor control process.

Some of the control processes are ranked the same as one another in the priority. Thereby, if, during the execution of the first control process, an execution request for the second control process that is ranked the same as the first control process emerges, then the execution of the first control process is continued and the second control process will be executed after the first control process is completed.

The control unit 23 is configured to repeatedly execute the signal control process at every predefined time interval. The frequency of execution (execution cycle) of the signal control process is set to the predefined allowable frequency value so as to prevent processing delays in the motor control process.

An appropriate value for the allowable frequency value is determined by actually executing the signal control process and the motor control process in the control unit 23. Specifically, the signal control process and the motor control process is executed in the control unit 23 while actually freely altering the frequency of execution (execution cycle) of the signal control process. And, a boundary value between a frequency of execution that does not result in processing delays in the motor control process and a frequency of execution that results in processing delay in the motor control process is decided. The allowable frequency value is determined based on the result of this decision.

Note that, a value lower than the boundary value obtained in the decision is set to be the allowable frequency value in the present embodiment. This can reduce processing delays in the motor control process caused by the execution of the signal control process.

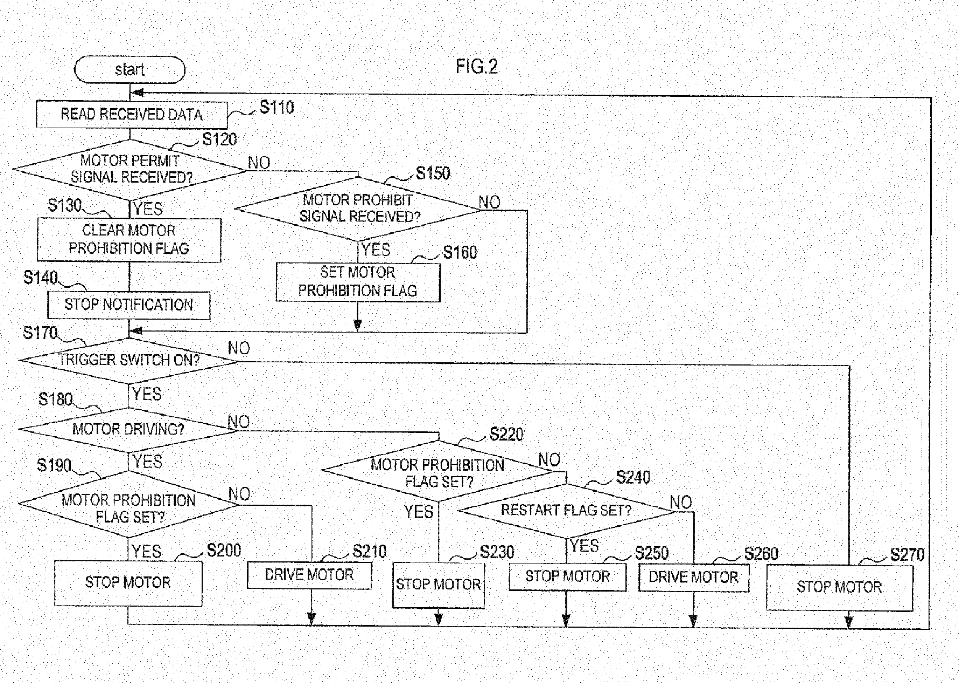

Next, the motor control process that the control unit 23 in the electric working machine 11 (the main body of the working machine 12) executes will be explained based on FIG. 2.

The control unit 23 in the main body of the working machine 12 starts the motor control process when the control unit 23 detects that the battery pack 13 is attached to the main body of the working machine 12. Specifically, the CPU disposed in the control unit 23 reads and executes the program of the motor control process stored in the ROM or RAM.

When the motor control process is started, a process to read various data, which is received from outside when executing the signal control process, is executed first in S110 (S stands for a step). For example, if the motor permit signal Sa is received from the managing device 31 when executing the signal control process, then the motor permit signal Sa is read; if the motor prohibit signal Sb is received from the managing device 31 when executing the signal control process, then the motor prohibit signal Sb is read. The motor permit signal Sa is a command signal to permit the drive of the motor 21 in the electric working machine 11; the motor prohibit signal Sb is a command signal to prohibit the drive of the motor 21 in the electric working machine 11.

In the subsequent S120, it is determined whether the motor permit signal Sa from the managing device 31 is received. If it is determined that the motor permit signal Sa is received, then the process proceeds to S130. If it is determined that the motor permit signal Sa is not received, then the process proceeds to S150.

When the process proceeds to S130, a process to clear a motor prohibition flag Fa is executed. The motor prohibition flag Fa is an inner flag used for a process in the control unit 23. If the drive of the motor 21 is prohibited, then the inner flag is set to a set-state; if the drive of the motor 21 is not prohibited, then the inner flag is set to a cleared state.

In S140, subsequent to the process executed in S130, a notification process for notifying the user of a motor-drive prohibition state is stopped. This notification process is a process for displaying on the display 24 in the electric working machine 11 (the main body of the working machine 12) that it is in the motor-drive prohibition state.

When the process proceeds from S120 to S150, it is determined whether the motor prohibit signal Sb from the managing device 31 is received. If it is determined that the motor prohibit signal Sb is received, then the process proceeds to S160; if it is determined that the motor prohibit signal Sb is not received yet, the process proceeds to S170.

The process proceeds to S170 when the process in S140 ends, or a negative determination is made in S150, or the process in S160 ends. In S170, it is determined whether the trigger switch 15 is in an on-state. If it is determined that the trigger switch 15 is in the on-state, then the process proceeds to S180; if it is determined that the trigger switch 15 is not in the on-state, then the process proceeds to S270.

When the process proceeds to S270, the motor 21 is stopped. In S270, a process to clear a restart flag Fb is executed. The restart flag Fb is an inner flag used for a process in the control unit 23. The restart flag Fb is a flag for determining whether the trigger switch 15 is turned from the on-state to an off-state after the motor prohibit signal Sb is received and the drive of the motor 21 is stopped.

Although "the motor permit signal Sa is received and the trigger switch 15 is in the on-state", the drive (operation) of the motor 21 is nevertheless prohibited if the restart flag Fb is in the set-state (a positive decision is made in S240, which will be mentioned later). If the restart flag Fb is in the cleared state (a negative decision is made in S240, which will be mentioned later), then the drive (operation) of the motor 21 is permitted accounting that "the motor permit signal Sa is received and the trigger switch 15 is in the on-state".

When the process proceeds from S170 to S180, it is determined whether the motor 21 is being driven. If it is determined that the motor is being driven, then the process proceeds to S190; if it is determined that the motor is not being driven (motor is stopped), then the process proceeds to S220. Whether the motor 21 is being driven can be determined by, for example, whether the electric current for driving is being conducted to the motor 21.

When the process proceeds to S190, it is determined whether the motor prohibition flag Fa is in the set-state. If it is determined that the motor prohibition flag Fa is in the set-state, then the process proceeds to S200; if it is determined that the motor prohibition flag Fa is in the cleared state, then the process proceeds to S210.

When the process proceeds to S200, the drive of the motor 21 is stopped. To be specific, conduction of the electric current for driving to the motor 21 is stopped. Also, the restart flag Fb is set to the set-state, and the notification process (the same process as in S140) for notifying the user of the motor-drive prohibition state is executed in S200.

When the process proceeds from S190 to S210, the drive control of the motor 21 is executed. To be specific, conduction of the electric current for driving to the motor 21 is executed. The motor 21 is driven at this time by turning the switch (illustration omitted) on or off to conduct or interrupt the electric current for driving to the motor 21. To be specific, the motor 21 is rotated to the target number of rotation which is in accordance with the operated amount of the trigger switch 15. To be more specific, the switch is turned on or off at a duty ratio corresponding to the target number of rotation.

When the process proceeds from S180 to S220, it is determined whether the motor prohibition flag Fa is in the set-state. If it is determined that the motor prohibition flag Fa is in the set-state, then the process proceeds to S230; if it is determined that the motor prohibition flag Fa is in the cleared state, then the process proceeds to S240.

When the process proceeds to S230, the drive of the motor 21 is stopped. To be specific, conduction of the electric current for driving to the motor 21 is stopped. Also, the notification process for notifying the user of the motor-drive prohibition state is executed in S230.

When the process proceeds from S220 to S240, it is determined whether the restart flag Fb is in the set-state. If it is determined that the restart flag Fb is in the set-state, then the process proceeds to S250; if it is determined that the restart flag Fb is in the cleared state, then the process proceeds to S260.

When the process proceeds to S250, the drive of the motor 21 is stopped. To be more specific, conduction of the electric current for driving to the motor 21 is stopped.

When the process proceeds from S240 to S260, the drive control of the motor 21 is executed. To be specific, conduction of the electric current for driving to the motor 21 is executed. The motor 21 is driven at this time by turning the switch (illustration omitted) on or off to conduct or interrupt the electric current for driving to the motor 21. To be specific, the motor 21 is rotated to the target number of rotation which is in accordance with the operated amount of the trigger switch 1. To be more specific, the switch is turned on or off at a duty ratio corresponding to the target number of rotation.

The process proceeds back to S110 again when any one of the processes in S200, S210, S230, S250, S260, or S270 ends.

In the motor control process configured as mentioned above, although the motor 21 is in a driving state by the operation of the trigger switch 15 (a positive decision is made in S180), the drive of the motor 21 is nevertheless stopped (S200) if the motor prohibition flag Fa is in the set-state (a positive decision is made in S190) by receiving the motor prohibit signal Sb from the managing device 31 (a positive decision is made in S150).

If the motor permit signal Sa is received from the managing device 31 (a positive decision is made in S120) after the motor prohibit signal Sb is received and the motor prohibition flag Fa is set to the set-state, then the motor prohibition flag Fa is set to the cleared state (S130). Note that, although the motor prohibition flag Fa is in the cleared state (a positive decision is made in S220) as mentioned above, the stop-state of the motor 21 is nevertheless maintained when the restart flag Fb is in the set-state (a positive decision is made in S240).

Subsequently, the trigger switch 15 is operated to be in the off-state (a negative decision is made in S170) and the restart flag Fb is set to the cleared state (S270). And then, a negative decision is made in S240 and the drive control of the motor 21 is executed (S260).

### [1-3. Function and Effect]

As explained hereinbefore, the working machine management system 1 in the present embodiment is configured so that the motor permit signal Sa and the motor prohibit signal Sb are sent from the managing device 31 to the electric working machine 11.

In the electric working machine 11, the control unit 23 that executes the motor control process controls the status of the electric power supply from the battery pack 13 to the motor 21, and at the same time, the control unit 23 that executes the signal control process sends and receives the signals to and from the managing device 31.

As mentioned above, if the motor prohibit signal Sb is received from the managing device 31 (a positive decision is made in S150) by executing the signal control process when the electric power supply from the battery pack 13 to the motor 21 is in process (when the electric current for driving is conducted), then the control unit 23 sets the motor prohibition flag to the set-state (S160) and stops the electric power supply to the motor 21 (a positive decision is made in S190 and the process proceeds to S200).

The electric working machine 11 configured as mentioned above can stop the operation of the electric working machine 11 as a result of an external factor, apart from an intention of the operator who uses this electric working machine 11, by receiving the motor prohibit signal Sb from the managing device 31.

For example, if the managing device 31 has detected an unsuitable processing performed on a product at a step upstream of a step to use the electric working machine 11 by an input operation of the emergency-stop command by the manager, then the operation of the electric working machine 11 can be stopped by sending the motor prohibit signal Sb to the electric working machine 11.

Continuation of manufacturing of the product that underwent the unsuitable processing can be thereby reduced, and as a consequence, the occurrence frequency of defective products during the product manufacturing can be lowered and wasted time in the manufacturing line can be reduced.

Thereby, according to the electric working machine 11, the operation of the electric working machine 11 (drive of the motor 21) can be stopped by sending the motor prohibit signal Sb (the stop-command signal) to the electric working machine 11 also when an external factor unrelated to the status of the electric working machine itself has occurred.

The electric working machine 11 is configured so that the control unit 23 executes the motor control process and the signal control process. In other words, the control unit 23, as a single calculation processing device, is configured to exert functions to control the status of the electric power supply from the battery pack 13 to the motor 21 by executing the motor control process. The control unit 23 is also configured to exert functions to send and receive signals to and from the managing device 31 by executing the signal control process.

Having the control unit 23 exert a plurality of functions as a single calculation processing device as described above can help prevent enlargement of an installation space of the calculation processing device in the electric working machine 11 compared with a case where a calculation processing device is provided for each function. In other words, the electric working machine 11 can be downsized.

In the electric working machine 11, the motor control process is ranked higher in the priority of process interruption than the signal control process in the control unit 23.

Thus, the control unit 23 interrupts the signal control process and preferentially executes the motor control process when an execution request for the motor control process emerges during the execution of the signal control process. Alternatively, the control unit 23 continues executing the motor control process and then executes the signal control process after the motor control process is ended when an execution request for the signal control process emerges during the execution of the motor control process.

Thereby, in the electric working machine 11, the motor control process is preferentially executed despite an interruption by the signal control process into the ongoing motor control process. And thus, processing delays in the motor control process and malfunctions in the control of the motor 21 can be reduced.

In the electric working machine 11, the frequency of execution of the signal control process in the control unit 23 is set to the predefined allowable frequency value so as to prevent processing delays in the motor control process. Thereby, malfunctions in the control of the motor 21 can be reduced since processing delays in the motor control process that is caused by the execution of the signal control process can be reduced.

In the electric working machine 11, once the control unit 23 receives the motor prohibit signal Sb and stops the electric power supply to the motor 21, the control unit 23 is configured to maintain the stop-state of power supply until the control unit 23 receives the motor permit signal Sa from the managing device 31.

In other words, the control unit 23 is configured so that, after the electric power supply to the motor 21 is stopped, the electric power supply to the motor 21 is permitted not in accordance with an intention of the user of the electric working machine 11, but in accordance with an intention of the operator (manager) of the managing device 31.

This prevents resuming of the electric power supply to the motor 21 in accordance with the intention of the user of the electric working machine 11 Thus, the stop-state of the electric working machine 11 can be continued in accordance with the intention of the manager who operates the managing device 31.

In the electric working machine 11, the motor 21 comprises a DC brushless motor. The DC brushless motor sometimes cannot be driven appropriately if there are processing delays in the motor control process when switch-controlling the conduction current.

Meanwhile, the motor control process is ranked higher than the signal control process in the priority of process interruption in the control unit 23 in the electric working machine 11. Thereby, processing delays in the motor control process can be reduced and malfunctions in the control of the motor 21 can be reduced.

In the electric working machine 11, the control unit 23 that executes the signal control process is configured to receive the motor permit signal Sa and the motor prohibit signal Sb from the managing device 31 by wireless transmission via the wireless transmission unit 25.

A need for coupling a cable for wire transmission between the electric working machine 11 and the managing device 31 is eliminated by having the electric working machine 11 configured to receive signals from the managing device 31 by wireless transmission as mentioned above. Accordingly, handling of cables during the use of the electric working machine 11 becomes unnecessary, and thereby, performance of the electric working machine 11 is improved.

The working machine management system 1 comprises an electric working machine 11, and a managing device 31. The electric working machine 11 is configured to be capable of stopping the drive of the motor 21 by receiving the motor prohibit signal Sb from the managing device 31 as mentioned above. The managing device 31 is configured to send the motor prohibit signal Sb to the electric working machine 11 when the emergency-stop condition is satisfied.

Such a working machine management system 1 can stop the operation of the electric working machine 11 (drive of the motor 21) by having the managing device 31 send the motor prohibit signal Sb to the electric working machine 11 although an external factor unrelated to the status of the electric working machine 11 itself is occurred.

### [1-4. Corresponding Wordings]

The following are explanations of corresponding wordings.

The working machine management system 1 corresponds to one example of the working machine management system; the electric working machine 11 (the impact driver 11) corresponds to one example of the electric working machine; and the managing device 31 corresponds to one example of the managing device.

The motor 21 corresponds to one example of the motor; the battery pack 13 corresponds to one example of the electric-power supply unit; the control unit 23 that executes the motor control process corresponds to one example of the control unit; the control unit 23 that executes the signal control process corresponds to one example of the signal processing unit; and the control unit 23 corresponds to one example of the calculation processing device. The motor permit signal Sa corresponds to one example of the permission command signal; and the motor prohibit signal Sb corresponds to one example of the stop-command signal.

### [2. Second Embodiment]

### [2-1. Overall Configuration]

As the second embodiment, a second working machine management system 101 that executes sending and receiving of a signal to and from an electric working machine and a managing device by wire transmission will be explained.

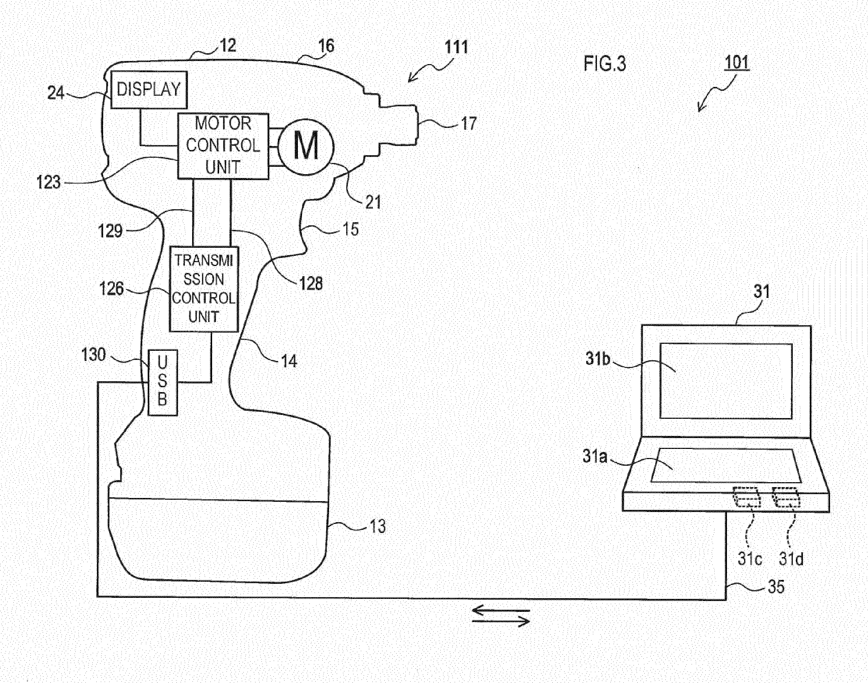

As shown in FIG. 3, the second working machine management system 101 comprises a second electric working machine 111, and a managing device 31.

The managing device 31 basically comprises the same configuration as the managing device 31 in the first embodiment although it differs from the managing device 31 in the form of transmission (wireless transmission, wire transmission). Thus, detailed explanations about the managing device 31 is omitted. Note that the managing device 31 in the second embodiment performs transmission not by wireless transmission via a wireless transmission unit 33, but by being coupled to the second electric working machine 111 via a USB cable 35.

The second electric working machine 111 differs from the electric working machine 11 in the first embodiment at least in the following matters.

The second electric working machine 111 comprises a motor control unit 123 and a transmission control unit 126 as substitute for the control unit 23. The second electric working machine 111 comprises a USB connecting electrode 130 as a substitute for the wireless transmission unit 25.

Explanations with respect to the second electric working machine 111 will be focused on its differences from the electric working machine 11. Note that the configurations of the second electric working machine 111 that are similar to those of the electric working machine 11 will be explained by using the same reference numerals.

The second electric working machine 111 is an impact driver 11 and comprises a main body of the working machine 12, and a battery pack 13.

The main body of the working machine 12 comprises a motor 21, the motor control unit 123, a display 24, the transmission control unit 126, and the USB connecting electrode 130.

The motor control unit 123 and the transmission control unit 126 that operate by the electric power supply received from the battery pack 13 are housed inside the main body of the working machine 12. The motor control unit 123 executes varieties of control processes such as a motor control process. The motor control process is for rotating the motor 21 in accordance with an operated amount of the trigger switch 15. The transmission control unit 126 executes a signal control process for sending and receiving a signal to and from the managing device 31.

The motor control unit 123 and the transmission control unit 126 each comprise a calculation processing device (microcomputer) comprising a CPU, ROM, RAM, and I/O, for example.

In the same manner as the control unit 23 in the first embodiment, the motor control unit 123 drives the motor 21 by turning on and off a switch (illustration omitted) to conduct and interrupt the electric current for driving to the motor 21 when the motor control unit 123 detects that the trigger switch 15 is turned on. Specifically, the motor control unit 123 rotates the motor 21 to a target number of rotation which is in accordance with the operated amount of the trigger switch 15. To be more specific, the motor control unit 123 turns on and off the switch at a duty ratio corresponding to the target number of rotation.

Note that a slightest pulling operation of the trigger switch 15 does not always immediately start the drive of the motor 21. The motor control unit 123 does not start the drive of the motor 21 until the pulling operation of the trigger switch 15 is extended to a given amount (small amount). If the amount of pulling operation of the trigger switch 15 exceeds the given amount, then the motor control unit 123 starts the drive of the motor 21 and then controls the drive of the motor 21 so that the number of rotation (speed of rotation) of the motor 21 changes in accordance with the pulled amount (for example, in proportion to the pulled amount). The motor control unit 123 controls the drive of the motor 21 so that the number of rotation of the motor 21 is a predefined maximum number of rotation when the trigger switch 15 is pulled to a specified position (for example, fully pulled to the rear).

The transmission control unit 126 is provided to perform wire transmission (transmission by USB connection) with the managing device 31. The transmission control unit 126 sends and receives various information by wire transmission to and from the managing device 31 by executing a transmission process based on a specified transmission protocol in accordance with a predefined control program. The transmission control unit 126 is coupled to the USB connecting electrode 130. The USB connecting electrode 130 is coupled to the managing device 31 via the USB cable 35.

The motor control unit 123 and the transmission control unit 126 are coupled to each other via a command signal path 128 and an information transmission path 129, and send and receive various information through these paths. The command signal path 128 is a dedicated path for sending only a reception status of a motor prohibit signal Sb from the transmission control unit 126 to the motor control unit 123. The information transmission path 129 is a path for mutually sending and receiving information to and from the motor control unit 123 and the transmission control unit 126.

The information transmission path 129 is also a path (a multiple information transmission path) that can send and receive various types of information. The motor control unit 123 and the transmission control unit 126 can execute sending and receiving of various information via the information transmission path 129 by performing the transmission process based on the specified transmission protocol in accordance with the predefined control program.

As described above, the managing device 31 is coupled to the second electric working machine 111 (specifically, the USB connecting electrode 130) via the USB cable 35. The managing device 31 sends and receives various information to and from the second electric working machine 111 by wire transmission.

### [2-2. Control Process in Electric Working Machine]

Next, varieties of control processes executed by the motor control unit 123 of the second electric working machine 111 (the main body of the working machine 12) will be explained.

The varieties of control processes that the motor control unit 123 executes include at least the motor control process, in the same manner as the control unit 23 in the first embodiment. The motor control unit 123 also executes processes such as a display control process for controlling displayed content on the display 24, and a malfunction detecting process for detecting malfunctions in the second electric working machine 111 (the main body of the working machine 12, and the battery pack 13). Priority of process interruption is fixed for each of the varieties of control processes.

The motor control unit 123 preferentially executes a control process that is ranked higher in the priority when execution requests for two or more control processes emerge at the same time. In the present second embodiment, the motor control process is ranked highest of all control processes in the priority.

The motor control process executed by the motor control unit 123 of the second electric working machine 111 (the main body of the working machine 12) includes basically the same processing contents as those executed in the motor control process in the first embodiment.

The processing content in S110 is the same in the first embodiment and the second embodiment in terms of executing a process of reading various data received from outside. Specifically, for example, if the motor permit signal Sa is received from the managing device 31 when executing the signal control process in the transmission control unit 126, then the motor permit signal Sa is read; and, if the motor prohibit signal Sb is received from the managing device 31 when executing the signal control process in the transmission control unit 126, then the motor prohibit signal Sb is read, also in the second embodiment, like the first embodiment.

The processing contents in S110 in the first embodiment and in the second embodiment are nevertheless slightly different in that, while various data received from outside when executing the signal control process in the control unit 23 are read in S110 in the first embodiment, various data received from outside by the signal control process in the transmission control unit 126 are read in S110 in the second embodiment.

In the same manner as in the first embodiment, although the motor 21 is in the driving state by the operation of the trigger switch 15 (a positive decision is made in S180), the drive of the motor 21 is nevertheless stopped (S200) if the motor prohibition flag Fa is in the set-state (a positive decision is made in S190) by receiving the motor prohibit signal Sb from the managing device 31 (a positive decision is made in S150) in the motor control process in the second embodiment.

If the motor permit signal Sa is received from the managing device 31 (a positive decision is made in S120) after the motor prohibit signal Sb is received and the motor prohibition flag Fa is set to the set-state, then the motor prohibition flag Fa is set to a cleared state (S130). Note that, although the motor prohibition flag Fa is in the cleared state (a positive decision is made in S220) as mentioned above, the stop-state of the motor 21 is nevertheless maintained when the restart flag Fb is in the set-state (a positive decision is made in S240).

Subsequently, the trigger switch 15 is operated to be in the off-state (a negative decision is made in S170) and the restart flag Fb is set to the cleared state (S270). And then, a negative decision is made in S240 and the drive control of the motor 21 is executed (S260).

### [2-3.Function and Effect]

As explained hereinbefore, the second working machine management system 101 in the second embodiment is configured so that the motor permit signal Sa and the motor prohibit signal Sb are sent from the managing device 31 to the second electric working machine 111 in the same manner as in the working machine management system 1 in the first embodiment.

In the second electric working machine 111, the motor control unit 123 that executes the motor control process controls the status of the electric power supply from the battery pack 13 to the motor 21, and, the transmission control unit 126 that executes the signal control process sends and receives signals to and from the managing device 31.

As mentioned above, if the motor prohibit signal Sb is received from the managing device 31 (a positive decision is made in S150) by executing the signal control process in the transmission control unit 126 when the electric power supply from the battery pack 13 to the motor 21 is in process (when the electric current for driving is conducted), then the motor control unit 123 sets the motor prohibition flag to the set-state (S160) and stops the electric power supply to the motor 21 (a positive decision is made in S190 and the process proceeds to S200).

The second electric working machine 111 configured as above can stop the operation of the second electric working machine 111 as a result of an external factor, apart from an intention of the operator who uses this second electric working machine 111, by receiving the motor prohibit signal Sb from the managing device 31.

Thereby, according to the second electric working machine 111, the operation of the second electric working machine 111 (drive of the motor 21) can be stopped by sending the motor prohibit signal Sb (the stop-command signal) to the second electric working machine 111 also when an external factor unrelated to the status of the electric working machine itself has occurred.

The second electric working machine 111 is configured so that the motor control unit 123 executes the motor control process and the transmission control unit 126 executes the signal control process.

In other words, in the second electric working machine 111, a calculation processing device for executing the motor control process and a calculation processing device for executing the signal control process are configured with separate calculation processing devices. Such a configuration can reduce processing delays caused by different processes influencing each other inside the single calculation processing device. Thereby, the motor control process and the signal control process can be separately and appropriately executed.

In the second electric working machine 111, the transmission control unit 126 is configured to notify the motor control unit 123 of the reception status of the motor prohibit signal Sb through the command signal path 128. The command signal path 128 is a dedicated transmission path that is solely for notifying the reception status of the motor prohibit signal Sb.

Note that the information transmission path 129 is a multiple information transmission path that sends and receives a plurality of information through one transmission path. If the transmission control unit 126 is configured to notify the reception status of the motor prohibit signal Sb through the information transmission path 129, then the required time for notifying the reception status of the motor prohibit signal Sb may become longer in some cases such as when there is a waiting time in sending and receiving other information.

In contrast, such a waiting time can be avoided by notifying the reception status of the motor prohibit signal Sb through the command signal path 128. In this case, the required time for sending and receiving information can be reduced compared with the case using the information transmission path 129. This can help swiftly send the reception status of the motor prohibit signal Sb from the transmission control unit 126 to the motor control unit 123 after the transmission control unit 126 receives the motor prohibit signal Sb from the managing device 31. The motor control unit 123 can thereby immediately stop the electric power supply to the motor 21.

In the second electric working machine 111, the transmission control unit 126 is coupled to the motor control unit 123 through the information transmission path 129, as the multiple information transmission path, apart from through the command signal path 128.

Thus, the transmission control unit 126 and the motor control unit 123 can send and receive information other than the reception status of the motor prohibit signal Sb (for example, the reception status of the motor permit signal Sa) to and from each other by sending and receiving a plurality of information through the information transmission path 129.

In other words, in the second electric working machine 111, the motor control unit 123 can immediately stop the electric power supply to the motor 21 as the transmission control unit 126 sends the reception status of the motor prohibit signal Sb through the command signal path 128; and at the same time, the transmission control unit 126 and the motor control unit 123 can also send and receive information other than the reception status of the motor prohibit signal Sb to and from each other by sending and receiving a plurality of information through the information transmission path 129.

In the second electric working machine 111, the transmission control unit 126 is configured to receive the motor prohibit signal Sb from the managing device 31 through wire transmission using the USB cable 35.

Such a configuration can help reduce occurrences of transmission errors due to influences such as of interference radio waves, and improve precision of transmission of the motor prohibit signal Sb compared with a configuration using wireless transmission for sending and receiving signals.

### [2-4. Corresponding Wordings]

The following are explanations of corresponding wordings.

The second working machine management system 101 corresponds to one example of the working machine management system; the second electric working machine 111 corresponds to one example of the electric working machine; and, the managing device 31 corresponds to one example of the managing device.

The motor 21 corresponds to one example of the motor; the battery pack 13 corresponds to one example of the electric-power supply unit, the motor control unit 123 that executes the motor control process corresponds to one example of the control unit; the transmission control unit 126 that executes the signal control process corresponds to one example of the signal processing unit; and, the motor control unit 123 and the transmission control unit 126 each correspond to one example of the calculation processing device.

The command signal path 128 corresponds to one example of the dedicated transmission path; and the information transmission path 129 corresponds to one example of the multiple information transmission path.

### [3. Third Embodiment]

### [3-1. Overall Configuration]

As the third embodiment, a third working machine management system 201 that comprises a plurality of electric working machines and is configured to execute sending and receiving of signals by wireless transmission between each of the electric working machines and a managing device will be explained.

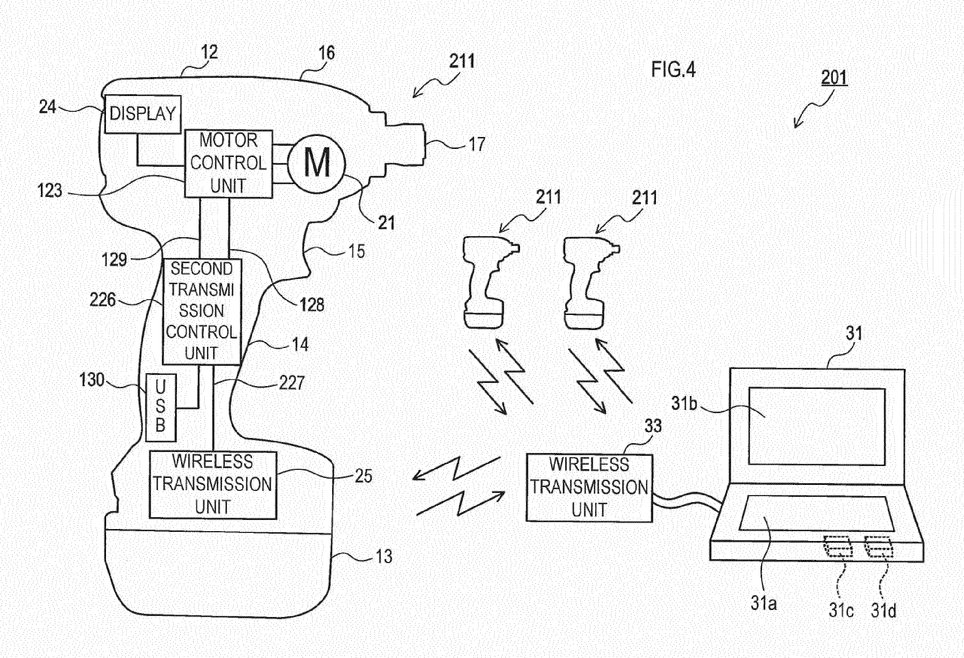

As shown in FIG. 4, a third working machine management system 201 comprises a plurality of third electric working machines 211, and the managing device 31. In FIG. 4, two of the three third electric working machines 211 are illustrated in a reduced size.

The managing device 31 is configured similarly to the managing device 31 in the first embodiment. Thus, explanations about the managing device 31 is omitted.

The third electric working machine 211 differs from the second electric working machine 111 in the second embodiment at least in the following matters.

The third electric working machine 211 comprises a second transmission control unit 226 as a substitute for the transmission control unit 126.

The third electric working machine 211 comprises a wireless transmission unit 25 as a substitute for the USB connecting electrode 130.

Explanations with respect to the third electric working machine 211 will be focused on its differences from the second electric working machine 111. Note that the configurations of the third electric working machine 211 that are similar to those of the electric working machine 11 or of the second electric working machine 111 will be explained by using the same reference numerals.

The third electric working machine 211 is an impact driver 11 and comprises a main body of the working machine 12, and a battery pack 13.

The main body of the working machine 12 comprises a motor 21, a motor control unit 123, a display 24, the second transmission control unit 226, a USB connecting electrode 130, and the wireless transmission unit 25.

The motor control unit 123 and the second transmission control unit 226 that operate by the electric power supply received from the battery pack 13 are housed inside the main body of the working machine 12. The motor control unit 123 executes varieties of control processes such as a motor control process, which is for rotating the motor 21 in accordance with an operated amount of the trigger switch 15. The second transmission control unit 226 executes a signal control process for sending and receiving a signal to and from the managing device 31.

The motor control unit 123 and the second transmission control unit 226 each comprise a calculation processing device (microcomputer) comprising a CPU, ROM, RAM, and I/O, for example.

The wireless transmission unit 25 is disposed for performing wireless transmission with the managing device 31 as in the first embodiment. The wireless transmission unit 25 is coupled to the second transmission control unit 226 via a signal path 227, and sends a wireless signal to the managing device 31 (to be specific, the wireless transmission unit 33) and receives a wireless signal from the managing device 31 in accordance with a command from the second transmission control unit 226.

The second transmission control unit 226 sends and receives various information to and from the managing device 31 via the wireless transmission unit 25 by executing a transmission process based on a specified transmission protocol in accordance with a predefined control program. The second transmission control unit 226 is also coupled to the USB connecting electrode 130 and thus can also be coupled to the managing device 31 via the USB connecting electrode 130 and a USB cable.

The motor control unit 123 and the second transmission control unit 226 are coupled to each other via a command signal path 128 and an information transmission path 129, and send and receives various information through these paths. The command signal path 128 is a dedicated path for sending only a reception status of a motor prohibit signal Sb from the second transmission control unit 226 to the motor control unit 123. The information transmission path 129 is a path for mutually sending and receiving information to and from the motor control unit 123 and the second transmission control unit 226.

The information transmission path 129 is also a path (a multiple information transmission path) that can send and receive various types of information. The motor control unit 123 and the second transmission control unit 226 can sending and receiving of various information via the information transmission path 129 by executing the transmission process based on the specified transmission protocol in accordance with the predefined control program.

The managing device 31 is coupled to the wireless transmission unit 33 for performing wireless transmission with the third electric working machine 211 as in the first embodiment.

The managing device 31 is configured to send the motor prohibit signal Sb to each of the plurality of third electric working machines 211 when the predefined emergency-stop condition is satisfied. In addition, the managing device 31 is configured to send the motor permit signal Sa to each of the plurality of third electric working machines 211 when the emergency-stop condition is not satisfied.

The managing device 31 in the present embodiment determines that the emergency-stop condition is satisfied when the emergency-stop command is inputted by the manager via the operating unit 31a, and determines that the emergency-stop condition is not satisfied when the normal operation command is inputted by the manager via the operating unit 31a.

### [3-2. Control Process in Electric Working Machine]

Varieties of control processes that the motor control unit 123 of the third electric working machine 211 (the main body of the working machine 12) executes include at least the motor control process as the motor control unit 123 in the second embodiment.

The motor control process executed by the motor control unit 123 of the third electric working machine 211 (the main body of the working machine 12) includes basically the same processing contents as those executed in the motor control process in the second embodiment.

The processing content in S110 in the third embodiment is the same as that in the first and second embodiments in terms of executing a process of reading various data received from outside. Specifically, for example, if the motor permit signal Sa is received from when executing the signal control process in the second transmission control unit 226, then the motor permit signal Sa is read; and, if the motor prohibit signal Sb is received from the managing device 31 when executing the signal control process in the second transmission control unit 226, then the motor prohibit signal Sb is read, also in the third embodiment, like the first and second embodiments.

The processing contents in S110 in the second embodiment and in the third embodiment are nevertheless slightly different in that, while various data received from outside when executing the signal control process in the transmission control unit 126 are read in S110 in the second embodiment, various data received from outside by the signal control process in the second transmission control unit 226 are read in S110 in the third embodiment.

In the same manner as in the second embodiment, although the motor 21 is in a driving state by the operation of the trigger switch 15 (a positive decision is made in S180), the drive of the motor 21 is nevertheless stopped (S200) if the motor prohibition flag Fa is in the set-state (a positive decision is made in S190) by receiving the motor prohibit signal Sb from the managing device 31 (a positive decision is made in S150) in the motor control process in the third embodiment.

If the motor permit signal Sa is received from the managing device 31 (a positive decision is made in S120) after the motor prohibit signal Sb is received and the motor prohibition flag Fa is set to the set-state, then the motor prohibition flag Fa is set to a cleared state (S130). Note that, although the motor prohibition flag Fa is in the cleared state (a positive decision is made in S220) as mentioned above, a stop-state of the motor 21 is nevertheless maintained when the restart flag Fb is in the set-state (a positive decision is made in S240).

Subsequently, the trigger switch 15 is operated to be in the off-state (a negative decision is made in S170) and the restart flag Fb is set to the cleared state (S270). And then, a negative decision is made in S240 and the drive control of the motor 21 is executed (S260).

### [3-3. Function and Effect]

As explained hereinbefore, the third working machine management system 201 of the third embodiment is configured so that motor permit signal Sa and the motor prohibit signal Sb are sent from the managing device 31 to the third electric working machine 211 in the same manner as the working machine management system 1 in the first embodiment and as the second working machine management system 101 in the second embodiment.

In the third electric working machine 211, the motor control unit 123 that executes the motor control process controls the status of the electric power supply from the battery pack 13 to the motor 21, and, the second transmission control unit 226 that executes the signal control process sends and receives signals to and from the managing device 31.

As mentioned above, if the motor prohibit signal Sb is received from the managing device 31 (a positive decision is made in S150) by executing the signal control process in the second transmission control unit 226 when the electric power supply from the battery pack 13 to the motor 21 is in process (when the electric current for driving is conducted), then the motor control unit 123 sets the motor prohibition flag to the set-state (S160) and stops the electric power supply to the motor 21 (a positive decision is made in S190 and the process proceeds to S200).

The third electric working machine 211 configured as above can stop the operation of the third electric working machine 211 as a result of an external factor, apart from an intention of the operator who uses this third electric working machine 211, by receiving the motor prohibit signal Sb from the managing device 31.

Thereby, according to the third electric working machine 211, the operation of the third electric working machine 211 (drive of the motor 21) can be stopped by sending the motor prohibit signal Sb (the stop-command signal) to the third electric working machine 211 also when an external factor unrelated to the status of the electric working machine itself has occurred.

The third working machine management system 201 comprises a plurality of the third electric working machines 211. The managing device 31 is configured to send the motor permit signal Sa and the motor prohibit signal Sb to the plurality of the third electric working machines 211.

In a situation to use the plurality of the third electric working machines 211, the third working machine management system 201 configured as above can stop the operation of the plurality of the third electric working machines 211 (drive of each motor 21) at once by having the managing device 31 send the motor prohibit signal Sb to the plurality of the third electric working machines 211 also when an external factor unrelated to the status of each electric working machine itself has occurred.

This enables to force the plurality of the third electric working machines 211 to stop without notifying the user of each of the plurality of the third electric working machines 211, making the management of the operating status of each electric working machine easier.

In addition, not only wireless transmission but also wire transmission (transmission by USB connection) can be used as a method of transmission between the third electric working machine 211 and the managing device 31. Thus, an appropriate method of transmission between the third electric working machine 211 and the managing device 31 can be selected from either the wireless transmission or the wire transmission depending on the purpose of use and/or installation environment of the third working machine management system 201.

### [3-4. Corresponding Wordings]

The following are explanations of corresponding wordings.

The third working machine management system 201 corresponds to one example of the working machine management system; the third electric working machine 211 corresponds to one example of the electric working machine; and, the managing device 31 corresponds to one example of the managing device.

The motor 21 corresponds to one example of the motor; the battery pack 13 corresponds to one example of the electric-power supply unit; the motor control unit 123 that executes the motor control process corresponds to one example of the control unit; the second transmission control unit 226 that executes the signal control process corresponds to one example of the signal processing unit; and, the motor control unit 123 and the second transmission control unit 226 each correspond to one example of the calculation processing device.

The command signal path 128 corresponds to one example of the dedicated transmission path; and, the information transmission path 129 corresponds to one example of the multiple information transmission path.

### [4. Other Embodiments]

For example, the aforementioned first embodiment explains a configuration that the managing device 31 sends the motor prohibit signal Sb to the electric working machine 11 when the emergency-stop command is inputted by the manager. Nevertheless, a condition to determine whether the managing device should send the motor prohibit signal Sb (the emergency-stop condition) is not limited to those described in the above configuration. For example, the emergency-stop condition may be considered as satisfied when any device among those configuring the working machine management system sends information on malfunctioning to the managing device.

In addition, without being limited to when an unsuitable processing is executed on a product at a step upstream of a step to use the electric working machine in the manufacturing line, the manager can force the electric working machine to stop by inputting the emergency-stop command also when the manager decides that some problem will happen as a consequence of continuing the motor drive in the electric working machine for example, and so the problems can be prevented from occurring.

In a case where the electric working machine is used in a working environment where on-duty hours and off-duty hours are separated, the managing device may be configured to determine whether it is the on-duty hours or the off-duty hours based on the current time. Such a managing device can perform operations using the electric working machine during the on-duty hours by sending the motor permit signal Sa to the electric working machine and stopping sending the motor prohibit signal Sb to the electric working machine during the on-duty hours. Such a managing device can reduce performance of operations using the electric working machine during the off-duty hours by stopping sending the motor permit signal Sa and sending the motor prohibit signal Sb to the electric working machine during the off-duty hours.

The configurations explained in the aforementioned embodiments comprise a DC brushless motor as the motor disposed in the electric working machine; nevertheless, configurations should not be limited to those as described above. For example, a configuration that comprises a DC brushed motor as the motor may be adopted.

The configurations explained in the aforementioned embodiment comprise an impact driver as the electric working machine; nevertheless, configurations should not be limited to those as described above. For example, the electric working machine may be an electric driver which is not an impact type, or may be a machine such as a hammer, grinder, circular saw, and a grass mower. In addition, the electric working machine should not be limited to a portable type electric working machine (handy tool), and may be a stationary type electric working machine.

Applications of the working machine management system in the present disclosure should not be limited to manufacturing lines in product manufacturing plants, and may be construction sites of large-scale buildings for example.

Moreover, the electric working machine should not be limited to being configured to receive the electric power supply from a battery pack, and may be configured to receive the electric power supply through an AC cord.

## Claims

1. An electric working machine (11,111,211), comprising:
a motor (21),
a trigger switch (15),
an electric-power supply unit (13) configured to supply electric power to the motor (21),
a control unit (23,123) configured to perform a motor control process for controlling status of the electric power supply from the electric-power supply unit (13) to the motor (21),
a signal processing unit (23,126) configured to perform a signal control process for sending and receiving a signal to and from the signal processing unit (23,126) and an external device, and to receive at least a stop-command signal (Sb) from the external device,
wherein the control unit (23,123) is configured to stop the electric power supply to the motor (21) in a case where the stop-command signal (Sb) is received at the signal processing unit (23,126) when the electric power supply from the electric-power supply unit (13) to the motor (21) is in process,
the control unit (23,123) is configured to, once the signal processing unit (23, 126) receives the stop-command signal (Sb) and the control unit (23, 123) thereby stops the electric power supply to the motor (21), maintain a stop-state of power supply to the motor (21) until the signal processing unit (23,126) receives a permission command signal (Sa) from the external device, and
the control unit (23, 123) is configured to, once the signal processing unit (23, 126) receives the stop-command signal (Sb) and the control unit (23, 123) thereby stops the electric power supply to the motor (21), and subsequently the signal processing unit (23, 126) receives the permission command signal (Sa) from the external device, perform the electric power supply from the electric-power supply unit (13) to the motor (21) under a condition, in which the control unit (23, 123) determines that the trigger switch (15) is in an off-state and the control unit (23, 123) subsequently determines that the trigger switch (15) is in an on-state and the motor (21) is not being driven.

2. The electric working machine (11,111,211) according to Claim 1,
wherein the control unit (23) and the signal processing unit (23) are configured with a single calculation processing device (23).

3. The electric working machine (11,111,211) according to Claim 2,
wherein the motor control process is ranked higher in priority of process interruption in the calculation processing device (23,123) than the signal control process.

4. The electric working machine (11,111,211) according to Claim 2 or 3,
wherein frequency of execution of the signal control process is set to a predefined allowable frequency value so as to prevent processing delay in the motor control process.

5. The electric working machine (11,111,211) according to Claim 1,
wherein the control unit (123) and the signal processing unit (126) are configured with separate calculation processing devices (123,126).

6. The electric working machine (11,111,211) according to Claim 5,
wherein the signal processing unit (126) is configured to notify the control unit (123) of reception status of the stop-command signal (Sb) through a dedicated transmission path (128) that is solely for notifying reception status of the stop-command signal (Sb).

7. The electric working machine (11,111,211) according to Claim 6,
wherein the signal processing unit (126) is coupled to the control unit (123) through a multiple information transmission path (129) for sending and receiving a plurality of information apart from through the dedicated transmission path (128).

8. The electric working machine (11,111,211) according to any one of Claims 1 to 7,
wherein the motor (21) is a DC brushless motor (21).

9. The electric working machine (11,111,211) according to any one of Claims 1 to 8,
wherein the signal processing unit (23,126) is configured to receive the stop-command signal (Sb) by wireless transmission.

10. The electric working machine (11,111,211) according to any one of Claims 1 to 8,
wherein the signal processing unit (23,126) is configured to receive the stop-command signal (Sb) by wire transmission.

11. A working machine management system (1,101,201) comprising;
at least one electric working machine (11,111,211), and
a managing device (31), wherein the at least one electric working machine (11,111,211) is the electric working machine (11,111,211) according to any one of Claims 1 to 10,
wherein the managing device (31) is configured to send a stop-command signal (Sb) to the at least one electric working machine (11,111,211) when a predefined emergency-stop condition is satisfied.

12. The working machine management system (1,101,201) according to Claim 11,
wherein the at least one electric working machine (11,111,211) comprises a plurality of electric working machines (11,111,211), and,
wherein the managing device (31) is configured to send the stop-command signal (Sb) to each of the plurality of electric working machines (11,111,211).

## Patentansprüche

1. Elektrische Arbeitsmaschine (11, 111, 211), mit:
einem Motor (21),
einem Auslöseschalter (15),
einer elektrischen Leistungsversorgungseinheit (13), die konfiguriert ist zum Liefern einer elektrischen Leistung an den Motor (21),
einer Steuerungseinheit (23, 123), die konfiguriert ist zum Durchführen eines Motorsteuerungsprozesses zum Steuern eines Zustands der elektrischen Leistungslieferung von der elektrischen Leistungsversorgungseinheit (13) an den Motor (21),
einer Signalverarbeitungseinheit (23, 126), die konfiguriert ist zum Durchführen eines Signalsteuerungsprozesses zum Senden und Empfangen eines Signals an die Signalverarbeitungseinheit (23, 126) und eine externe Vorrichtung und zum Empfangen eines Signals von der Signalverarbeitungseinheit (23, 126) und der externen Vorrichtung, und zum Empfangen von mindestens einem Stopp-Befehl-Signal (Sb) von der externen Vorrichtung,
wobei die Steuerungseinheit (23, 123) konfiguriert ist zum Stoppen der elektrischen Leistungslieferung an den Motor (21) in einem Fall, bei dem das Stopp-Befehl-Signal (Sb) an der Signalverarbeitungseinheit (23, 126) empfangen wird, wenn die elektrische Leistungslieferung von der elektrischen Leistungsversorgungseinheit (13) an den Motor (21) im Gange ist,
die Steuerungseinheit (23, 123) konfiguriert ist zum Aufrechterhalten eines Stopp-Zustands der Leistungslieferung an den Motor (21) bis die Signalverarbeitungseinheit (23, 126) ein Berechtigungssignal (Sa) von der externen Vorrichtung empfängt, sobald die Signalverarbeitungseinheit (23, 126) das Stopp-Befehl-Signal (Sb) empfängt und die Steuerungseinheit (23, 123) dadurch die elektrische Leistungslieferung an den Motor (21) stoppt, und
die Steuerungseinheit (23, 123) konfiguriert ist zum Durchführen der elektrischen Leistungslieferung von der elektrischen Leistungsversorgungseinheit (13) an den Motor (21) unter einer Bedingung, bei der die Steuerungseinheit (23, 123) bestimmt, dass der Auslöseschalter (15) in einem Aus-Zustand ist, und die Steuerungseinheit (23, 123) anschließend bestimmt, dass der Auslöseschalter (15) in einem Ein-Zustand ist und der Motor nicht angetrieben wird, sobald die Signalverarbeitungseinheit (23, 126) das Stopp-Befehl-Signal (Sb) empfängt und die Steuerungseinheit (23, 123) dadurch die elektrische Leistungslieferung an den Motor (21) stoppt, und anschließend die Signalverarbeitungseinheit (23, 126) das Berechtigungssignal (Sa) von der externen Vorrichtung empfängt.

2. Elektrische Arbeitsmaschine (11, 111, 211) nach Anspruch 1,
bei der die Steuerungseinheit (23) und die Signalverarbeitungseinheit (23) mit einer einzelnen Berechnungsverarbeitungsvorrichtung (23) konfiguriert sind.

3. Elektrische Arbeitsmaschine (11, 111, 211) nach Anspruch 2,
bei der der Motorsteuerungsprozess bezüglich einer Priorität für eine Prozessunterbrechung in der Berechnungsverarbeitungsvorrichtung (23, 123) höher eingestuft ist als der Signalsteuerungsprozess.

4. Elektrische Arbeitsmaschine (11, 111, 211) nach Anspruch 2 oder 3,
bei der Häufigkeit der Ausführung des Signalsteuerungsprozesses auf einen vordefinierten zulässigen Häufigkeitswert festgelegt ist, um dadurch eine Verarbeitungsverzögerung in dem Motorsteuerungsprozess zu verhindern.

5. Elektrische Arbeitsmaschine (11, 111, 211) nach Anspruch 1,
bei der die Steuerungseinheit (123) und die Signalverarbeitungseinheit (126) mit separaten Berechnungsverarbeitungsvorrichtungen (123, 126) konfiguriert sind.

6. Elektrische Arbeitsmaschine (11, 111, 211) nach Anspruche 5,
bei der die Signalverarbeitungseinheit (126) konfiguriert ist zur Benachrichtigung der Steuerungseinheit (123) bezüglich eines Empfangszustand des Stopp-Befehl-Signals (Sb) über einen fest zugeordneten Übertragungsweg (128), der allein zur Benachrichtigung eines Empfangszustands des Stopp-Befehl-Signals (Sb) dient.

7. Elektrische Arbeitsmaschine (11, 111, 211) nach Anspruch 6,
bei der die Signalverarbeitungseinheit (126) mit der Steuerungseinheit (123) über einen Mehrfachinformations-Übertragungsweg (129) gekoppelt ist zum Senden und Empfangen einer Mehrzahl von Information abgesehen von dem fest zugeordneten Übertragungsweg (128).

8. Elektrische Arbeitsmaschine (11, 111, 211) nach einem der Ansprüche 1 bis 7,
bei der der Motor (21) ein bürstenloser Gleichstrommotor (21) ist.

9. Elektrische Arbeitsmaschine (11, 111, 211) nach einem der Ansprüche 1 bis 8,
bei der die Signalverarbeitungseinheit (23, 126) konfiguriert ist zum Empfangen des Stopp-Befehl-Signals (Sb) durch drahtlose Übertragung.

10. Elektrische Arbeitsmaschine (11, 111, 211) nach einem der Ansprüche 1 bis 8,
bei der die Signalverarbeitungseinheit (23, 126) konfiguriert ist zum Empfangen des Stopp-Befehl-Signals (Sb) durch drahtgebundene Übertragung.

11. Arbeitsmaschinenmanagementsystem (1, 101, 201) mit:
mindestens einer elektrischen Arbeitsmaschine (11, 111, 211), und
einer Managementvorrichtung (31), wobei die mindestens eine elektrische Arbeitsmaschine (11, 111, 211) die elektrische Arbeitsmaschine (11, 111, 211) nach einem der Ansprüche 1 bis 10 ist,
wobei die Managementvorrichtung (31) konfiguriert ist zum Senden eines Stopp-Befehl-Signals (Sb) an die mindestens eine elektrische Arbeitsmaschine (11, 111, 211), wenn eine vordefinierte Not-Ausschaltbedingung erfüllt ist.

12. Arbeitsmaschinenmanagementsystem (1, 101, 201) nach Anspruch 11, bei dem die mindestens eine elektrische Arbeitsmaschine (11, 111, 211) eine Mehrzahl von elektrischen Arbeitsmaschinen (11, 111, 211) aufweist, und
die Managementvorrichtung (31) konfiguriert ist zum Senden des Stopp-Befehl-Signals (Sb) an jede von der Mehrzahl von elektrischen Arbeitsmaschinen (11, 111, 211).

## Revendications

1. Machine de travail électrique (11, 111, 211), comprenant :
un moteur (21),
un commutateur de déclencheur (15),
une unité d'alimentation en énergie électrique (13) configurée pour fournir de l'énergie électrique au moteur (21),
une unité de commande (23, 123) configurée pour exécuter un procédé de commande de moteur pour commander l'état de l'alimentation en énergie électrique de l'unité d'alimentation en énergie électrique (13) au moteur (21),
une unité de traitement de signaux (23, 126) configurée pour exécuter un procédé de commande de signaux pour envoyer et recevoir un signal vers et depuis l'unité de traitement de signaux (23, 126) et un dispositif externe, et pour recevoir au moins un signal de commande d'arrêt (Sb) depuis le dispositif externe,
dans lequel l'unité de commande (23, 123) est configurée pour arrêter l'alimentation en énergie électrique du moteur (21) dans un cas où le signal de commande d'arrêt (Sb) est reçu au niveau de l'unité de traitement de signaux (23, 126) lorsque l'alimentation en énergie électrique depuis l'unité d'alimentation en énergie électrique (13) vers le moteur (21) est en cours,
l'unité de commande (23, 123) est configurée pour, une fois que l'unité de traitement de signaux (23, 126) reçoit le signal de commande d'arrêt (Sb) et que l'unité de commande (23, 123) arrête ainsi l'alimentation électrique du moteur (21), maintenir un état d'arrêt de l'alimentation en énergie électrique du moteur (21) jusqu'à ce que l'unité de traitement de signaux (23, 126) reçoive un signal de commande de permission (Sa) du dispositif externe, et
l'unité de commande (23, 123) est configurée pour, une fois que l'unité de traitement de signaux (23, 126) reçoit le signal de commande d'arrêt (Sb) et que l'unité de commande (23, 123) arrête ainsi l'alimentation en énergie électrique du moteur (21), et ensuite l'unité de traitement de signaux (23, 126) reçoit le signal de commande de permission (Sa) du dispositif externe, effectuer l'alimentation en énergie électrique à partir de l'unité d'alimentation en énergie électrique (13) vers le moteur (21) dans une condition, dans laquelle l'unité de commande (23, 123) détermine que le commutateur de déclencheur (15) est dans un état d'arrêt et l'unité de commande (23, 123) détermine ensuite que le commutateur de déclencheur (15) est dans un état de marche et que le moteur (21) n'est pas entraîné.

2. Machine de travail électrique (11, 111, 211) selon la revendication 1,
dans laquelle l'unité de commande (23) et l'unité de traitement de signaux (23) sont configurées avec un seul dispositif de traitement de calcul (23).

3. Machine de travail électrique (11, 111, 211) selon la revendication 2,
dans laquelle le procédé de commande de moteur est classé plus haut en priorité d'interruption de procédé dans le dispositif de traitement de calcul (23, 123) que le procédé de commande de signaux.

4. Machine de travail électrique (11, 111, 211) selon la revendication 2 ou 3,
dans laquelle la fréquence d'exécution du procédé de commande de signaux est fixée à une valeur de fréquence admissible prédéfinie de manière à empêcher un retard de traitement dans le procédé de commande de moteur.

5. Machine de travail électrique (11, 111, 211) selon la revendication 1,
dans laquelle l'unité de commande (123) et l'unité de traitement de signaux (126) sont configurées avec des dispositifs de traitement de calcul séparés (123, 126).

6. Machine de travail électrique (11, 111, 211) selon la revendication 5,
dans laquelle l'unité de traitement de signaux (126) est configurée pour notifier à l'unité de commande (123) l'état de réception du signal de commande d'arrêt (Sb) par l'intermédiaire d'un chemin de transmission dédié (128) qui est uniquement destiné à notifier l'état de réception du signal de commande d'arrêt (Sb).

7. Machine de travail électrique (11, 111, 211) selon la revendication 6,
dans laquelle l'unité de traitement de signaux (126) est couplée à l'unité de commande (123) par l'intermédiaire d'un chemin de transmission d'informations multiples (129) pour envoyer et recevoir une pluralité d'informations en dehors du chemin de transmission dédié (128).

8. Machine de travail électrique selon l'une quelconque des revendications 1 à 7, dans laquelle le moteur (21) est un moteur sans balai à courant continu (21).

9. Machine de travail électrique selon l'une quelconque des revendications 1 à 8, dans laquelle l'unité de traitement de signaux (23, 126) est configurée pour recevoir le signal de commande d'arrêt (Sb) par transmission sans fil.

10. Machine de travail électrique selon l'une quelconque des revendications 1 à 8,
dans laquelle l'unité de traitement de signaux (23, 126) est configurée pour recevoir le signal de commande d'arrêt (Sb) par transmission filaire.

11. Système de gestion de machine de travail (1, 101, 201) comprenant ;
au moins une machine de travail électrique (11, 111, 211), et
un dispositif de gestion (31), dans lequel ladite au moins une machine de travail électrique (11, 111, 211) est la machine de travail électrique selon l'une quelconque des revendications 1 à 10,
dans lequel le dispositif de gestion (31) est configuré pour envoyer un signal de commande d'arrêt (Sb) à ladite au moins une machine de travail électrique (11, 111, 211) lorsqu'une condition d'arrêt d'urgence prédéfinie est satisfaite.

12. Système de gestion de machine de travail (1, 101, 201) selon la revendication 11,
dans lequel ladite au moins une machine de travail électrique comprend une pluralité de machines de travail électriques (11, 111, 211), et,
dans lequel le dispositif de gestion (31) est configuré pour envoyer le signal de commande d'arrêt (Sb) à chacune de la pluralité de machines de travail électriques (11, 111, 211).
